# EUROPEAN PATENT APPLICATION

(11) **EP 4 693 720 A1**
(43) Date of publication of application: **11.02.2026**
(21) Application number: 25179806.2
(22) Date of filing: 30.05.2025
(51) Int. Cl.: H01M 50/595, H01M 10/42, H01M 50/284

(54) **NOISE PREVENTION INSULATION TAPE AND BATTERY PACK ADOPTING THE SAME**

(30) Priority: 05.08.2024 KR 20240104259
(71) Applicant: SAMSUNG SDI CO., LTD., Yongin-si, Gyeonggi-do 17084 (KR)
(72) Inventor: WANG, Hanjun, 17084 Yongin-si (KR)
(74) Representative: Marks & Clerk LLP

(57) **Abstract**

The present disclosure relates to a battery pack to which an insulation tape is attached and is directed to providing an insulation tape for preventing noise generated by the movement of a battery cell, and a battery pack adopting the same. To this end, the present disclosure provides a battery pack that may include a pack case in which a plurality of battery cells are accommodated, a protection circuit module (PCM) to which an electrode terminal of the battery cell is bonded and which includes a protection circuit and a conductive pattern, and an insulation tape covering an upper portion of the PCM and adhered to portions of the pack case and the battery cell, wherein the insulation tape includes a non-adhesive part in contact with a portion of the battery cell.

## Description

### FIELD

The present disclosure relates to a battery pack, and more specifically, to a battery pack to which an insulation tape is applied.

### BACKGROUND

Unlike primary batteries that may not be charged, batteries such as secondary batteries are batteries that may be charged and discharged. Low-capacity batteries are used in small portable electronic devices such as smartphones, feature phones, laptop computers, digital cameras, and camcorders, and large-capacity batteries are widely used as power sources for driving motors in hybrid electric vehicles, electric vehicles, and other vehicles, power storage batteries, and the like. These batteries may include an electrode assembly composed of positive and negative electrodes, a case in which the electrode assembly is accommodated, an electrode terminal connected to the electrode assembly, and the like.

A plurality of batteries may be gathered to form an energy storage device with expanded voltage and/or current capacity. Energy storage devices may include battery modules/packs used in vehicles or electrical appliances.

Battery packs used in products such as notebook computers and tablet PCs may be provided with prismatic batteries or pouch-type batteries.

The above information disclosed in this Background section is for enhancement of understanding of the background of the present disclosure, and therefore, it may contain information that does not constitute a related (or prior) art.

### SUMMARY

According to some aspects, the present disclosure is directed to providing an insulation tape that can prevent noise generated by the movement of a battery cell due to bending or twisting of a battery pack, and a battery pack adopting the same.

According to some aspects of the present disclosure, there is provided a battery pack including a pack case in which a plurality of battery cells are accommodated, a protection circuit module (PCM) to which an electrode terminal of the battery cell is bonded and which includes a protection circuit and a conductive pattern, and an insulation tape covering an upper portion of the PCM and adhered to portions of the pack case and the battery cell, wherein the insulation tape includes a non-adhesive part in contact with a portion of the battery cell.

According to other aspects of the present disclosure, there is provided an insulation tape for a battery pack, which includes an adhesive part covering an upper portion of a protection circuit module (PCM) of a battery pack including a pack case in which a plurality of battery cells are accommodated and the protection circuit module (PCM) to which an electrode terminal of the battery cell is bonded and which includes a protection circuit and a conductive pattern, and which adhesive part is adhered to portions of the pack case and the battery cell, and a non-adhesive part in contact with a portion of the battery cell.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings accompanying the present specification illustrate embodiments of the present disclosure and further describe aspects and features of the present disclosure together with the detailed description of the present disclosure. Thus, the present disclosure should not be construed as being limited to the drawings, in which:
FIG. 1 schematically shows an electrode assembly of a secondary battery;
FIG. 2 schematically shows a pouch-type battery;
FIG. 3A is a top perspective view showing the exterior of a prismatic battery;
FIG. 3B is a cross-sectional view along line I-I' of FIG. 3A;
FIG. 4 is a plan view of a battery pack applicable to a product such as a notebook or a tablet PC;
FIG. 5 shows a state of a protection circuit module (PCM) of the battery pack of FIG. 4 covered with an insulation tape;
FIG. 6A shows an area of the insulation tape in detail;
FIG. 6B shows an area of the insulation tape in detail;
FIG. 6C shows an area of the insulation tape in detail;
FIG. 7 shows a state of the PCM covered with an insulation tape according to some embodiments of the present disclosure;
FIG. 8 shows an area covering a portion of an upper portion of each battery cell in a first area of the insulation tape in detail according to some embodiments of the present disclosure;
FIG. 9 shows an area covering a third area of the insulation tape in detail according to some embodiments of the present disclosure;
FIG. 10 shows an area covering a second area of the insulation tape in detail according to some embodiments of the present disclosure; and
FIG. 11 is a cross-sectional view along line X-X' in FIG. 7.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components.

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

A battery pack may be manufactured in a structure in which a plurality of battery cells are arranged in series and parallel in a pack case, and an insulation tape may be attached to the battery cells.

However, the inventor has appreciated that conventional battery packs having such a structure have a problem in that noise is generated by the movement of the battery cells and an adhesive surface of the insulation tape when the battery pack is pressed or twisted due to deformation of the shape of the product.

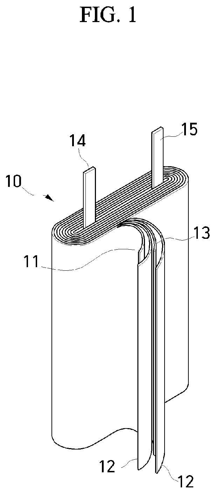

FIG. 1 schematically shows an electrode assembly of a secondary battery.

Referring to FIG. 1, an electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to the longitudinal direction of a case. In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum (Al) or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 can prevent a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

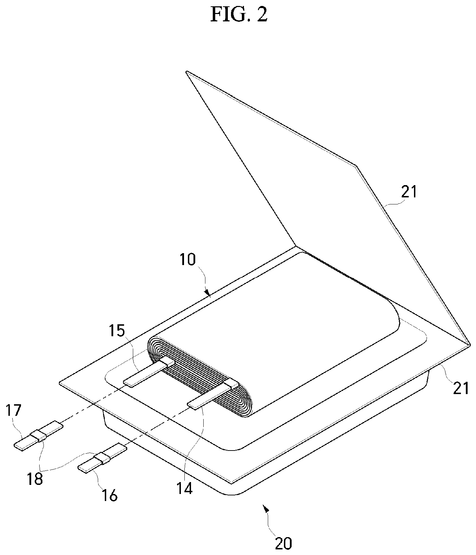

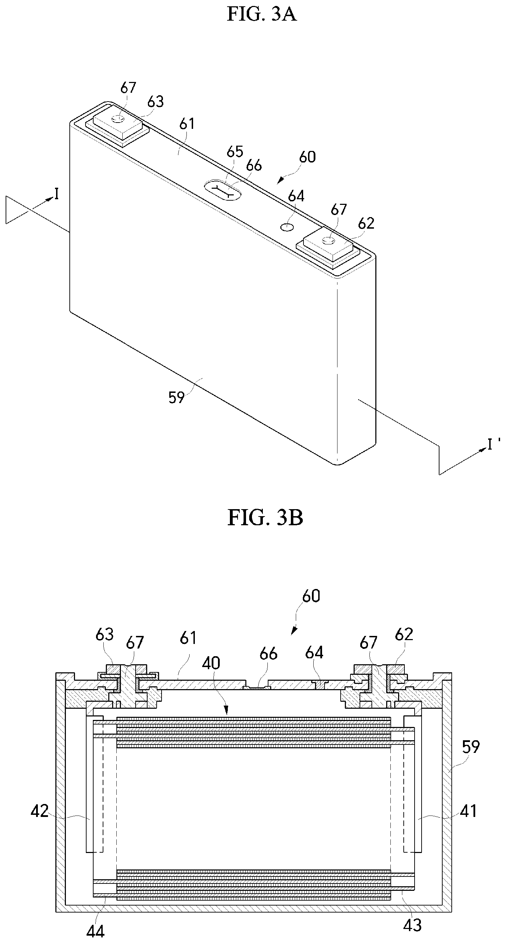

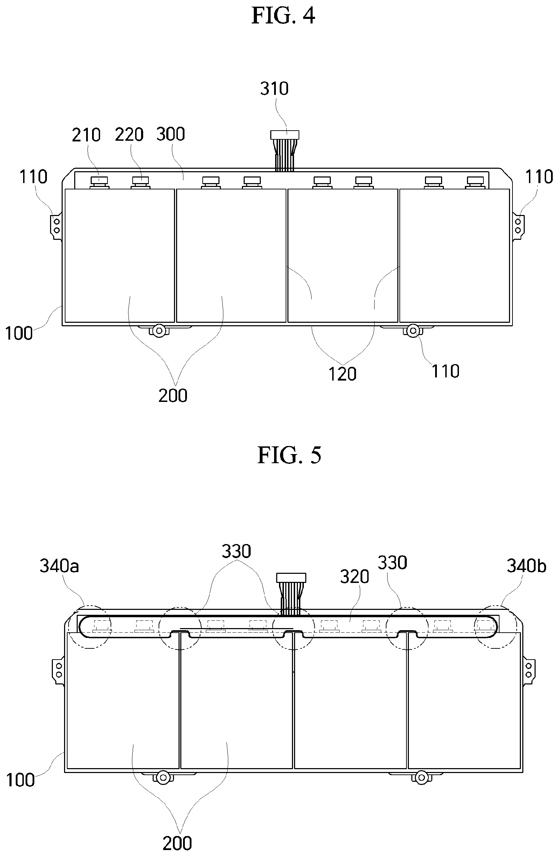

In some embodiments, the electrode assembly 10 may be accommodated in a case along with an electrolyte. In a pouch-type secondary battery, an electrode assembly 10 may be accommodated in a pouch made of flexible material (*see* e.g., FIG. 2). In a cylindrical or prismatic secondary battery, an electrode assembly 10 may be accommodated in a cylindrical or prismatic metal casing (*see* e.g., FIGS. 3 and 4).

Hereinafter, suitable materials that may be used for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material may be in a range of about 90 wt% to about 99.5 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent can act as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 schematically illustrates a pouch-type secondary battery.

The pouch-type secondary battery includes an electrode assembly 10 and a pouch 20 that accommodates the electrode assembly 10.

The electrode assembly 10 is the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with a tab film 18 for insulation from the pouch 20.

The pouch 20 may be sealed by having sealing parts 21 at the edges thereof come into contact with each other while accommodating the electrode assembly 10 therein, in which case the sealing may be achieved with the tab film 18 interposed between the sealing parts 21. The sealing parts 21 of the pouch 20 may each be made of a thermal fusion material that generally has weak adhesion to metal. Thus, it may be fused to the pouch 20 by interposing the thin tab film 18 between the sealing parts 21.

FIG. 3A is a top perspective view of a prismatic secondary battery, according to some embodiments of the present disclosure.

A case 59 may define an overall appearance of the prismatic secondary battery, and may be made of a conductive metal, such as aluminum, aluminum alloy, or nickel-plated steel. In addition, the case 59 may provide a space for accommodating an electrode assembly therein.

A cap assembly 60 may include a cap plate 61 that covers the opening of the case 59. In some examples, the case 59 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 may be included for discharging gas generated inside the secondary battery.

FIG. 3B is a cross-sectional view taken along the line I-I' of FIG. 3A, according to some embodiments of the present disclosure.

As shown in FIG. 3B, a prismatic secondary battery may include an electrode assembly 40, a first current collector 41, a first terminal 62, a second current collector 42, a second terminal 63, a case 59, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction (e.g., the y direction) of the case 59. In some other embodiments, the electrode assembly 40 is a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors are located at the top of the electrode assembly 40.

As illustrated in FIG. 3B, the first current collector 41 and the second current collector 42 are connected to the first terminal 62 and the second terminal 63 through connection members 67, respectively. In some embodiments, the connection members 67 may each have an outer peripheral surface that is threaded, and may be fastened to the first terminal 62 and the second terminal 63 by screwing. However, the present disclosure is not limited thereto. For example, the connection members 67 may also be coupled to the first terminal 62 and the second terminal 63 by riveting or welding.

FIG. 4 is a plan view of a battery pack applicable to a product such as a notebook or a tablet PC.

This type of battery pack may include a pack case 100 in which a plurality of pouch-shaped or prismatic battery cells 200 are accommodated, and a protection circuit module (PCM) 300 to which each of electrode terminals 210 and 220 of the battery cells 200 is bonded and which includes a conductive pattern.

The pack case 100 may include a mounting part 110 fastened using a bolt or the like. In addition, a gap and/or adjacent portion 120 may be formed between the battery cell 200 accommodated in the pack case 100 and another battery cell 200, and a partition wall, such as a rib, may be positioned in the gap. The PCM 300 may include a harness and a connector 310 for supplying battery power to an operating part of the product and for exchanging signals.

FIG. 5 shows a state of the PCM 300 of the battery pack of FIG. 4 covered with an insulation tape 320. The insulation tape 320 can insulate and protect electrode terminals 210 and 220 of the battery cell 200 and components mounted on the PCM 300 from an external environment.

A rear surface of the insulation tape 320 may have an adhesive layer coated with an adhesive, and generally, the insulation tape 320 peels off a release paper attached to the adhesive layer and is attached to and covers a terminal portion of the battery cell 200 and the PCM 300. As shown in FIG. 5, a portion to which the adhesive layer of the insulation tape 320 is attached may be a portion of the battery cell 200 and/or a portion of the pack case 100.

In FIG. 5, area 330 represents an area of the insulation tape 320 positioned between the battery cells 200, area 340a represents an area of the insulation tape 320 positioned in the battery cell 200 at a left end, and area 340b represents an area of the insulation tape 320 positioned in the battery cell 200 at a right end (e.g., based on the orientation shown in FIG. 5).

In these areas 330, 340a, and 340b, the adhesive layer of the insulation tape 320 may be adhered to the portion of the battery cell 200 and/or the portion of the pack case 100 as described above. In this state, when the pack case 100 is bent or twisted, the battery cell 200 moves and the insulation tape 320 is also bent or twisted together, and thus noise may be generated in the process of the adhesive layer of the insulation tape 320 attached to a target (the portion of the battery cell 200 and/or the portion of the pack case 100) being detached and reattached. A noise generation area will be described in more detail below.

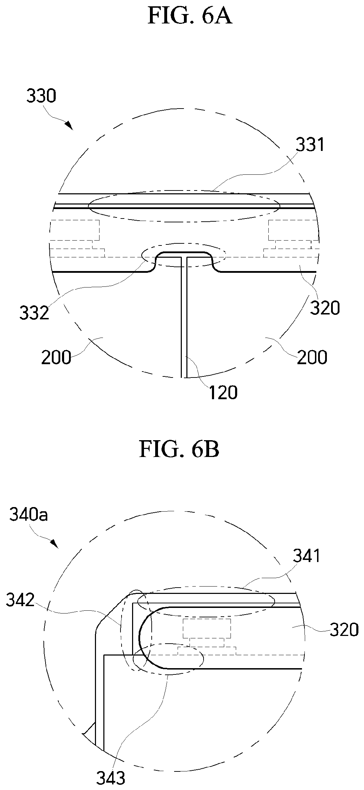

FIG. 6A shows the area 330 of the insulation tape 320 in detail. Here, a surface to which the adhesive layer of the insulation tape 320 is adhered may include an adhesive surface 331 with a portion of an upper portion of the pack case 100 and an adhesive surface 332 with a portion of each battery cell 200 between the battery cells 200. Among these adhesive surfaces 331 and 332, greater noise may be generated in particular at the adhesive surface 332 with the portion of each battery cell 200 between the battery cells 200. This is because the movement of adjacent battery cells 200 is greater than the deformation of the pack case 100.

FIG. 6B shows the area 340a of the insulation tape 320 in detail. Here, the surface to which the adhesive layer of the insulation tape 320 is adhered may include an adhesive surface 341 with a portion of the upper portion of the pack case 100, an adhesive surface 342 with a portion of the corner of the pack case 100, and an adhesive surface 343 with a portion of the battery cell 200. Among these adhesive surfaces, the greatest noise may be generated, in particular, at the adhesive surface 343 with the portion of the battery cell 200. This is because the movement of the corresponding battery cell 200 is greater than the deformation of the pack case 100.

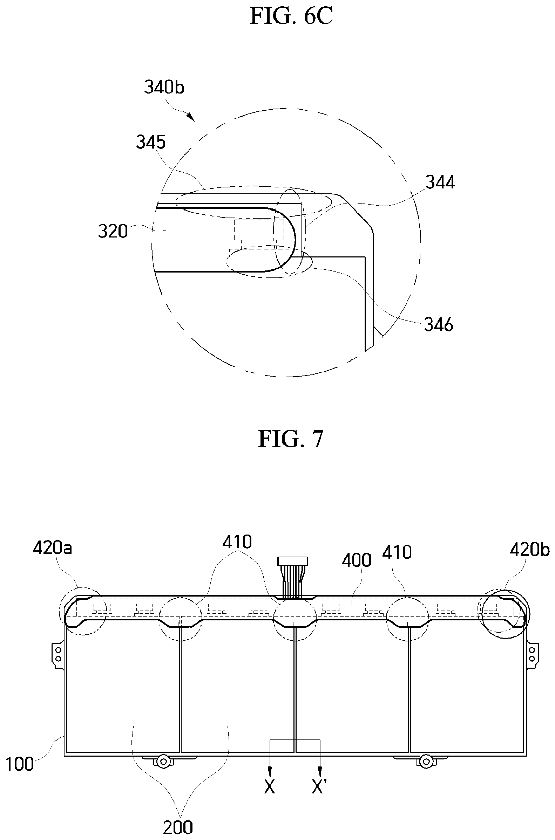

FIG. 6C shows the area 340b of the insulation tape 320 in detail. Here, the surface to which the adhesive layer of the insulation tape 320 is adhered may include an adhesive surface 345 with a portion of the upper portion of the pack case 100, an adhesive surface 344 with a portion of the corner of the pack case 100, and an adhesive surface 346 with a portion of the battery cell 200. Among these adhesive surfaces, the greatest noise may be generated, in particular, at the adhesive surface 346 with the portion of the battery cell 200. This is because the movement of the corresponding battery cell 200 is greater than the deformation of the pack case 100.

FIG. 7 shows a state of the PCM covered with the insulation tape 400 according to some embodiments of the present disclosure.

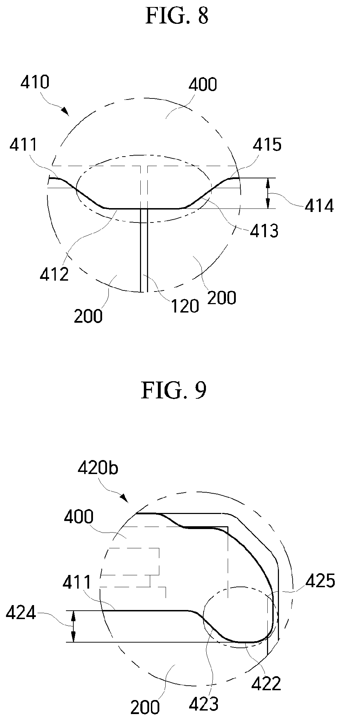

As described above, the insulation tape 400 has a structure for preventing the generation of noise in the battery cell 200 and includes a first area 410 that covers a portion of the upper portion of each battery cell 200 between the battery cells 200, a second area 420a that covers the battery cell 200 adjacent to a portion of a left corner of the pack case 100, and a third area 420b that covers the battery cell 200 adjacent to a portion of a right corner of the pack case 100. As shown in FIG. 7, the insulation tape 400 may be a long strip-shaped tape, and three first areas 410, the left second area 420a, and the right third area 420b protrude (extend) from a main body basic outline 411 (*see* e.g., FIG. 8). These regions will be described in detail below.

FIG. 8 shows an area covering a portion of the upper portion of each battery cell 200 in the first area 410 of the insulation tape 400 in detail according to some embodiments of the present disclosure, that is, between adjacent battery cells 200.

A portion of the insulation tape 400 that is partially visible above adjacent battery cells 200 extends downward (e.g., an extension) to cover an adjacent portion 120 between the two battery cells 200. That is, the insulation tape 400 includes an outline 412 that extends a distance 414 downward from the main body basic outline 411 described above with reference to FIG. 7, that is, to a central portion of the battery cell 200. A connection line 413 between the basic outline 411 and the extended outline 412 has a gentle slope, but is not limited thereto.

In some embodiments, the entirety or a portion of the extension of the insulation tape 400 may include a non-adhesive part 415. However, in other embodiments, the insulation tape 400 does not have the above-described extension, and the non-adhesive part 415 may be included in the boundary of the basic outline 411 of the insulation tape 400.

The distance 414 of the extended outline 412 extending from the basic outline 411 may be in the range of 0 to about 15% of a vertical length of the battery cell 200 and is preferably about 10% of the vertical length of the battery cell 200. Here, '0' means that no extension is present.

In some embodiments, the non-adhesive part 415 may be a portion that is not coated with an adhesive during the manufacturing of the insulation tape 400. In some other embodiments, the non-adhesive part 415 may be coated with the adhesive, but may be a part from which the release paper is not peeled off. For example, when the release paper is peeled off before the insulation tape 400 is attached to the PCM as shown in FIG. 7, the release paper covering the non-adhesive part 415 may be left without being peeled off.

As shown in FIG. 8, by including the non-adhesive part 415 covering the adjacent portion 120 between the two battery cells 200 in the insulation tape 400, it is possible to prevent noise generated between adjacent battery cells 200 described in FIG. 6A. This is because the non-adhesive part 415 covers the battery cell 200 but is not adhered and thus the insulation tape 400 is not affected even when the battery cell 200 moves.

FIG. 9 shows the third area 420b of the insulation tape 400 in detail according to some embodiments of the present disclosure, that is, the area covering a portion of the right corner of the pack case 100 shown in FIG. 7.

A portion of the insulation tape 400 that is partially visible at the upper right corner of the pack case 100 extends downward to cover a portion of the upper portion of the battery cell 200. That is, the insulation tape 400 includes an extended outline 422 that extends a distance 424 downward from the basic outline 411, that is, toward the central portion of the battery cell 200. A connection line 423 between the basic outline 411 and the extended outline 422 has a gentle slope, but is not limited thereto.

In some embodiments, the entirety or a portion of the extension of the insulation tape 400 may include a non-adhesive part 425. However, in other embodiments, the insulation tape 400 does not have the above-described extension, and the non-adhesive part 425 may be included in the boundary of the basic outline 411 of the insulation tape 400.

The distance 424 of the extended outline 422 extending from the basic outline 411 may be in the range of 0 to about 15% of a vertical length of the battery cell 200 and is preferably about 10% of the vertical length of the battery cell 200. Here, '0' means that no extension is present.

In addition, in some embodiments, the non-adhesive part 425 may be a portion that is not coated with an adhesive during the manufacturing of the insulation tape 400. In some other embodiments, the non-adhesive part 425 may be coated with the adhesive, but may be a part from which the release paper is not peeled off. For example, when the release paper is peeled off before the insulation tape 400 is attached to the PCM as shown in FIG. 7, the release paper covering the non-adhesive part 415 may be left without being peeled off.

As shown in FIG. 9, it is possible to prevent the generation of noise described above in FIG. 6C by including the non-adhesive part 425 covering an adjacent area of the pack case 100 and the battery cell 200 in the insulation tape 400. This is because the non-adhesive part 425 covers a portion of the battery cell 200 but is not adhered and thus the insulation tape 400 is not affected even when the battery cell 200 moves.

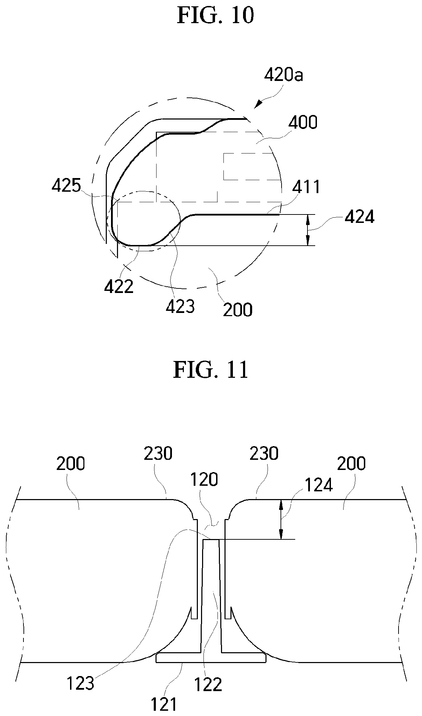

FIG. 10 shows the second area 420a of the insulation tape 400 in detail according to some embodiments of the present disclosure, that is, the area covering a portion of the left corner of the pack case 100 shown in FIG. 7. A configuration of FIG. 10 is substantially symmetrical to the configuration of FIG. 9.

A portion of the insulation tape 400 covering a portion of the upper left corner of the pack case 100 extends downward to cover a portion of the upper portion of the battery cell 200. That is, the insulation tape 400 includes an extended outline 422 that extends a distance 424 downward from the basic outline 411, that is, toward the central portion of the battery cell 200. The connection line 423 between the basic outline 411 and the extended outline 422 has a gentle slope, but is not limited thereto.

In some embodiments, the entirety or a portion of the extension of the insulation tape 400 may include a non-adhesive part 425. However, in other embodiments, the insulation tape 400 does not have the above-described extension, and the non-adhesive part 425 may be included in the boundary of the basic outline 411 of the insulation tape 400.

The distance 424 of the extended outline 422 extending from the basic outline 411 may be in the range of 0 to about 15% of a vertical length of the battery cell 200 and is preferably about 10% of the vertical length of the battery cell 200. Here, '0' means that no extension is present.

In addition, in some embodiments, the non-adhesive part 425 may be a portion that is not coated with an adhesive during the manufacturing of the insulation tape 400. In some other embodiments, the non-adhesive part 425 may be coated with the adhesive, but may be a part from which the release paper is not peeled off. For example, when the release paper is peeled off before the insulation tape 400 is attached to the PCM as shown in FIG. 7, the release paper covering the non-adhesive part 415 may be left without being peeled off.

As shown in FIG. 10, it is possible to prevent the generation of noise described above in FIG. 6B by including the non-adhesive part 425 covering an adjacent area of the pack case 100 and the battery cell 200 in the insulation tape 400. This is because the non-adhesive part 425 covers a portion of the battery cell 200 but is not adhered and thus the cause of the generation of noise is eliminated. That is, even when the battery cell 200 moves, the insulation tape 400 is not affected.

FIG. 11 is a cross-sectional view along line X-X' in FIG. 7. FIG. 11 shows a structure for additionally eliminating the source of the generation of noise in the adjacent portion 120 between the battery cells 200.

In FIG. 11, a spacer or a partition wall 122 is positioned in the adjacent portion 120 between the two battery cells 200. The partition wall 122 may be implemented as a rib or boss formed on the base plate 121 of the pack case. By forming an upper portion 123 of the partition wall 122 to not exceed an upper surface 230 of the lying battery cell 200, it is possible to suppress the generation of noise. Conventionally, since the upper portion 123 of the partition wall 122 is substantially the same as the upper surface 230 of the battery cell 200, when the pack case is bent or twisted, the battery cell 200 interferes with the partition wall 122 while moving, thereby generating noise. However, in the structure of FIG. 11, even when the pack case is bent or twisted, the degree to which the battery cell 200 interferes with the partition wall 122 is small, and thereby the generation of noise can be greatly reduced.

Here, the upper portion 123 of the partition wall 122 is lower than the upper surface 230 of the battery cell 200, and a distance 124 may range from about 0.5 to 1.5 mm, and may preferably be 1 mm.

Meanwhile, according to some embodiments of the present disclosure, referring to the above drawings, an insulation tape used in a battery pack may include an adhesive part covering an upper portion of a protection circuit module (PCM) of a battery pack, which includes a pack case in which a plurality of battery cells are accommodated and the PCM to which an electrode terminal of a battery cell is bonded and which includes a protection circuit and a conductive pattern, and adhered to portions of the pack case and the battery cell, and a non-adhesive part in contact with a portion of the battery cell.

In some embodiments, the non-adhesive part may come into contact with a portion on which the battery cell moves (e.g., during operation).

In some embodiments, the non-adhesive part may be included in a first area of the insulation tape that is disposed between adjacent battery cells and covers a portion of each battery cell. In some other embodiments, the non-adhesive part may be included in a second area of the insulation tape, which covers a portion of a first corner of the pack case and a battery cell adjacent thereto, and a third area of the insulation tape, which covers a portion of a second corner of the pack case and a battery cell adjacent thereto.

Here, the first area may include an extension extending from a basic outline of the insulation tape toward the battery cell, and in this case, the non-adhesive part may be included in the extension. Here, the second area may include an extension extending from a basic outline of the insulation tape toward the battery cell, and in this case, the non-adhesive part may be included in the extension. In addition, the third area may include an extension extending from a basic outline of the insulation tape toward the battery cell, and in this case, the non-adhesive part may be included in the extension.

In some embodiments, the non-adhesive part may be a portion that is not coated with an adhesive during the manufacturing of the insulation tape. In some other embodiments, the non-adhesive part may be an adhesive layer from which a release paper is not peeled off.

According to the present disclosure, since a battery cell may include a non-adhesive part in an area covering a moving portion, it is possible to prevent noise generated by the movement of the battery cell due to the bending or twisting of a battery pack. Therefore, it is possible to improve the quality of the battery pack and improve the quality and spec satisfaction of a product to which the battery pack is applied.

According to some embodiments, there is provided a method of manufacturing a battery pack comprising: providing a pack case in which a plurality of battery cells are accommodated; providing a protection circuit module (PCM) to which an electrode terminal of a battery cell of the plurality of battery cells is bonded and which includes a protection circuit and a conductive pattern; and providing an insulation tape covering an upper portion of the PCM and adhered to portions of the pack case and the battery cell, wherein the insulation tape includes a non-adhesive part in contact with a portion of the battery cell.

Although the present disclosure has been described above with respect to embodiments thereof, the present disclosure is not limited thereto. Various modifications and variations can be made thereto by those skilled in the art within the scope of the present disclosure. For example, although the present disclosure has been described above with reference to a battery pack applied to a laptop PC or tablet PC, the present disclosure may be applied to products other than laptop PCs or tablet PCs through appropriate modifications or changes.

Embodiments are set out in the following clauses:
1. A battery pack comprising:
   a pack case in which a plurality of battery cells are accommodated;
   a protection circuit module (PCM) to which an electrode terminal of a battery cell of the plurality of battery cells is bonded and which includes a protection circuit and a conductive pattern; and
   an insulation tape covering an upper portion of the PCM and adhered to portions of the pack case and the battery cell,
   wherein the insulation tape includes a non-adhesive part in contact with a portion of the battery cell.
2. The battery pack according to clause 1, wherein the non-adhesive part of the insulation tape is in contact with a portion on which the battery cell moves during operation.
3. The battery pack according to clause 1 or 2, wherein the insulation tape includes a first area covering a portion of each battery cell between adjacent battery cells.
4. The battery pack according to clause 1, 2 or 3, wherein the insulation tape comprises:
   a second area covering a portion of a first corner of the pack case and a battery cell adjacent thereto; and
   a third area covering a portion of a second corner of the pack case and a battery cell adjacent thereto.
5. The battery pack according to clause 3 or 4 when dependent on clause 3, wherein the first area comprises an extension extending from a basic outline of the insulation tape toward the battery cell, and
   the extension comprises the non-adhesive part of the insulation tape.
6. The battery pack according to clause 4 or clause 5 when dependent on clause 4,
   wherein the second area comprises an extension extending from a basic outline of the insulation tape toward the battery cell, and the extension comprises the non-adhesive part of the insulation tape, .
   wherein the third area comprises an extension extending from a basic outline of the insulation tape toward the battery cell, and the extension comprises the non-adhesive part of the insulation tape.
7. The battery pack according to any preceding clause, wherein the non-adhesive part is an adhesive layer from which a release paper is not peeled off.
8. The battery pack according to any preceding clause, further comprising a partition wall positioned in an adjacent portion between battery cells of the plurality of battery cells,
   wherein an upper portion of the partition wall is lower than an upper surface of the battery cell.
9. An insulation tape for a battery pack, comprising:
   an adhesive part covering an upper portion of a protection circuit module (PCM) of a battery pack, the battery pack including:
      a pack case in which a plurality of battery cells are accommodated, and
      the protection circuit module (PCM) to which an electrode terminal of a battery cell of the plurality of battery cells is bonded and which includes a protection circuit and a conductive pattern,
   wherein the adhesive part is adhered to portions of the pack case and the battery cell; and
   a non-adhesive part in contact with a portion of the battery cell.
10. The insulation tape according to clause 9, wherein the non-adhesive part is in contact with a portion on which the battery cell moves.
11. The insulation tape according to clause 9 or 10,
   wherein the non-adhesive part is included in a first area covering a portion of each battery cell between adjacent battery cells,
   wherein the first area comprises an extension extending from a basic outline of the insulation tape toward the battery cell, and the extension comprises the non-adhesive part.
12. The insulation tape according to clause 9, 10 or 11,
   wherein the non-adhesive part is included in: a second area covering a portion of a first corner of the pack case and a battery cell adjacent thereto; and a third area covering a portion of a second corner of the pack case and a battery cell adjacent thereto,
   wherein the second area comprises an extension extending from a basic outline of the insulation tape toward the battery cell, and the extension comprises the non-adhesive part, and
   wherein the third area comprises an extension extending from a basic outline of the insulation tape toward the battery cell, and the extension comprises the non-adhesive part.
13. The insulation tape according to any one of clauses 9 to 12, wherein the non-adhesive part is a portion of the insulating tape that is not coated with an adhesive.
14. The insulation tape according to any one of clauses 9 to 12, wherein the non-adhesive part is an adhesive layer from which a release paper is not peeled off.
15. A method of manufacturing a battery pack comprising:
   providing a pack case in which a plurality of battery cells are accommodated;
   providing a protection circuit module (PCM) to which an electrode terminal of a battery cell of the plurality of battery cells is bonded and which includes a protection circuit and a conductive pattern; and
   providing an insulation tape covering an upper portion of the PCM and adhered to portions of the pack case and the battery cell,
   wherein the insulation tape includes a non-adhesive part in contact with a portion of the battery cell.

## Claims

1. A battery pack comprising:
a pack case in which a plurality of battery cells are accommodated;
a protection circuit module (PCM) to which an electrode terminal of a battery cell of the plurality of battery cells is bonded and which includes a protection circuit and a conductive pattern; and
an insulation tape covering an upper portion of the PCM and adhered to portions of the pack case and the battery cell,
wherein the insulation tape includes a non-adhesive part in contact with a portion of the battery cell.

2. The battery pack as claimed in claim 1, wherein the non-adhesive part of the insulation tape is in contact with a portion on which the battery cell moves during operation.

3. The battery pack as claimed in claim 1 or 2, wherein the insulation tape includes a first area covering a portion of each battery cell between adjacent battery cells.

4. The battery pack as claimed in claim 1, 2 or 3, wherein the insulation tape comprises:
a second area covering a portion of a first corner of the pack case and a battery cell adjacent thereto; and
a third area covering a portion of a second corner of the pack case and a battery cell adjacent thereto.

5. The battery pack as claimed in claim 3 or claim 4 when dependent on claim 3, wherein the first area comprises an extension extending from a basic outline of the insulation tape toward the battery cell, and
the extension comprises the non-adhesive part of the insulation tape.

6. The battery pack as claimed in claim 4 or claim 5 when dependent on claim 4,
wherein the second area comprises an extension extending from a basic outline of the insulation tape toward the battery cell, and the extension comprises the non-adhesive part of the insulation tape,
wherein the third area comprises an extension extending from a basic outline of the insulation tape toward the battery cell, and the extension comprises the non-adhesive part of the insulation tape.

7. The battery pack as claimed in any preceding claim, wherein the non-adhesive part is an adhesive layer from which a release paper is not peeled off.

8. The battery pack as claimed in any preceding claim, further comprising a partition wall positioned in an adjacent portion between battery cells of the plurality of battery cells,
wherein an upper portion of the partition wall is lower than an upper surface of the battery cell.

9. An insulation tape for a battery pack, comprising:
an adhesive part for covering an upper portion of a protection circuit module (PCM) of a battery pack, the battery pack including:
a pack case in which a plurality of battery cells are accommodated, and
the protection circuit module (PCM) to which an electrode terminal of a battery cell of the plurality of battery cells is bonded and which includes a protection circuit and a conductive pattern,
wherein the adhesive part is configured to be adhered to portions of the pack case and the battery cell; and
a non-adhesive part configured to be in contact with a portion of the battery cell.

10. The insulation tape as claimed in claim 9, wherein the non-adhesive part is in contact with a portion on which the battery cell moves during operation.

11. The insulation tape as claimed in claim 9 or 10,
wherein the non-adhesive part is included in a first area configured to cover a portion of each battery cell between adjacent battery cells,
wherein the first area comprises an extension configured to extend from a basic outline of the insulation tape toward the battery cell, and the extension comprises the non-adhesive part.

12. The insulation tape as claimed in claim 9, 10 or 11,
wherein the non-adhesive part is included in: a second area configured to cover a portion of a first corner of the pack case and a battery cell adjacent thereto; and a third area configured to cover a portion of a second corner of the pack case and a battery cell adjacent thereto,
wherein the second area comprises an extension configured to extend from a basic outline of the insulation tape toward the battery cell, and the extension comprises the non-adhesive part, and
wherein the third area comprises an extension configured to extend from a basic outline of the insulation tape toward the battery cell, and the extension comprises the non-adhesive part.

13. The insulation tape as claimed in any one of claims 9 to 12, wherein the non-adhesive part is a portion of the insulating tape that is not coated with an adhesive.

14. The insulation tape as claimed in any one of claims 9 to 12, wherein the non-adhesive part is an adhesive layer from which a release paper is not peeled off.

15. A method of manufacturing a battery pack comprising:
providing a pack case in which a plurality of battery cells are accommodated;
providing a protection circuit module (PCM) to which an electrode terminal of a battery cell of the plurality of battery cells is bonded and which includes a protection circuit and a conductive pattern; and
providing an insulation tape covering an upper portion of the PCM and adhered to portions of the pack case and the battery cell,
wherein the insulation tape includes a non-adhesive part in contact with a portion of the battery cell.
